# EUROPÄISCHE PATENTSCHRIFT

(11) **EP 2 573 488 B1**
(45) Veröffentlichungstag und Bekanntmachung des Hinweises auf die Patenterteilung: **19.04.2017**
(21) Anmeldenummer: 11182516.2
(22) Anmeldetag: 23.09.2011
(51) Int. Cl.: F24J 3/08, F24J 3/00, B65F 1/14, C05F 17/00, C05F 17/02

(54) **Anordnung mit mehreren Wärmetauschersonden zur Gewinnung von Wärme aus verrottender Biomasse**
System with several heat exchanger probes for heat recovery from rotting biomass
Système avec plusieurs sondes caloporteuses pour le captage de chaleur de la biomasse pourrie

(43) Veröffentlichungstag der Anmeldung: 27.03.2013
(73) Patentinhaber: Netzer, Florian, 82405 Wessobrunn (DE)
(72) Erfinder: Netzer, Florian, 82405 Wessobrunn (DE)
(74) Vertreter: Maiwald Patentanwalts GmbH

(56) Entgegenhaltungen:
- WO-A1-2008/009289
- CH-A5- 649 623
- CH-A5- 673 075
- DE-A1- 3 114 262
- GB-A- 2 045 909

## Beschreibung

### Gebiet der Erfindung

Die Erfindung betrifft Niedertemperaturheizsysteme. Insbesondere betrifft die Erfindung eine einfach in eine verrottende Masse zu platzierende (und auch wieder einfach zu extrahierende) Anordnung mit mehreren Wärmetauschersonden zur Gewinnung von Wärme aus der verrottenden Biomasse, die Verwendung einer solchen Anordnung zur Versorgung einer Niedertemperaturheizung, ein beheiztes Gewächshaus, sowie ein Verfahren zum Gewinnen von Wärme aus verrottender Biomasse.

Technologischer Hintergrund Zur Beheizung von Räumen oder Schwimmbecken können Niedertemperaturheizsysteme verwendet werden. Beispielsweise kann es sich hierbei um Niedertemperaturheizungen handeln, welche durch die Verbrennung von Gas, Öl oder Holz, oder aber durch die Umsetzung von Sonnenenergie oder mit Hilfe einer Wärmepumpe betrieben werden.

Eine Anordnung mit mehreren Wärmetauschersonden zur Gewinnung von Wärme aus verrottender Biomasse gemäss dem nächstkommenden Stand der Technik zeigt die Schrift CH 673 075 A.

### Zusammenfassung der Erfindung

Es ist eine Aufgabe der Erfindung, eine Anordnung mit mehreren Wärmetauschersonden zur Gewinnung von Wärme aus verrottender Biomasse anzugeben, welche sich insbesondere durch eine besonders effiziente Einsetzbarkeit auszeichnet.

Diese Aufgabe wird durch die Merkmale der unabhängigen Patentansprüche gelöst. Weiterbildungen der Erfindung ergeben sich aus den Unteransprüchen sowie der folgenden Beschreibung.

Gemäß einem ersten Aspekt der Erfindung ist eine Anordnung mit mehreren Wärmetauschersonden zur Gewinnung von Wärme aus verrottender Biomasse angegeben. Die Sonde weist eine Innenwandung zum Einleiten von Fluid in einen Wärmetauscherbereich der Wärmetauschersonde auf. Weiterhin ist eine Außenwandung vorgesehen, welche dem Rückleiten des Fluids aus dem Wärmetauscherbereich dient. Der Wärmetauscherbereich befindet sich hierbei zwischen der Innenwandung und der Außenwandung. Die Wärmetauschersonde ist zum Erwärmen des Fluids durch einen Wärmefluss von der Biomasse durch die Außenwandung hindurch zum Fluid im Wärmetauscherbereich ausgeführt, während das Fluid zwischen der Innenwandung und der Außenwandung der Sonde in Richtung Sondenauslass geleitet wird, wenn die Wärmetauschersonde von der verrottenden Biomasse umgeben ist.

Die bei dem Verrottungsvorgang entstehende Wärme wird also durch die Außenwandung hindurch ins Innere der Sonde geleitet und erwärmt dort das Fluid auf seinem Weg durch den Wärmetauscherbereich zum Auslass der Sonde.

Bei Verrottungsvorgängen von Biomasse, bei der es sich beispielsweise um Mist, aber auch um Laub, Gras oder andere Garten- oder Küchenabfälle handeln kann, entsteht erhebliche Wärme. Diese Wärme kann im Extremfall sogar zur Selbstentzündung der Biomasse führen. Hierbei können Temperaturen von über 90 Grad Celsius auftreten. Die erhöhten Temperaturen können in einem Temperaturbereich von 30 Grad Celsius bis 70 Grad Celsius je nach Zusammensetzung der Biomasse über Wochen anhalten. Dieser Zeitraum hängt im Wesentlichen von der Geschwindigkeit und der Effizienz der Verrottung, der Menge an verrottender Biomasse, dem Druck, der Feuchtigkeit, und ggf. auch von der Sauerstoffzufuhr ab.

Der in der Landwirtschaft anfallende Mist bildet oft ein Entsorgungsproblem aufgrund zu hoher Viehdichte und der Überdüngung der Felder. Oft muss der anfallende Mist aufwändig entsorgt werden. Die Abwärme des Verrottungsprozesses ist oft ungenutzt.

Die Wärmetauschersonde kann die beim Verrottungsprozess entstehende Wärme sinnvoll nutzen, indem hierdurch ein Fluid, bei dem es sich beispielsweise um Wasser oder eine andere Flüssigkeit handeln kann, erwärmt wird.

Somit ist ein umweltverträglicher Einsatz auch in ökologisch sehr sensiblen Gebieten ebenso möglich, wie im Siedlungsbereich. Insbesondere können das Biomassereservoir mobil und das Gesamtsystem für stromnetzunabhängigen Betrieb ausgeführt sein.

Gemäß einem Aspekt der Erfindung läuft die Außenwandung der Wärmetauschersonde an ihrem (unteren) Ende spitz zu oder verengt sich zumindest, so dass ein Eindrücken der Wärmetauschersonde in die Biomasse erleichtert wird, dies besonders unter dem Aspekt, dass die Sonde(n) immer erst dann in ein Reservoir an entsprechend durchwärmter Biomasse eingebracht wird/werden, wenn ein Wärmeaustausch energetisch lohnend erscheint. Umgekehrt kann/können die Sonde(n) bei Absinken der Temperatur der Biomasse (etwa durch fortgeschrittene Zersetzung) ohne ein Umschichten von Biomasse und aufwändiger Neuplatzierung von z.B. Rippensystemen, die in derselben eingegraben werden müssten, entfernt werden und in ein neues "reifes" Biomassereservoir umgesetzt werden.

Die Biomasse aus dem "verbrauchten" Reservoir wird zu diesem Zeitpunkt dann einen Zustand an humöser Zersetzung angenommen haben, dass sie problemlos als Dünger oder Pflanzsubstrat verwendet werden kann, was sich etwa bei frischem Mist aus Gründen des Grundwasserschutzes verbietet.

Gemäß einem weiteren Aspekt der Erfindung ist die Innenwandung als Rohrleitung mit einem (oberen) offenen Ende zur Entgegennahme bzw. zum Einleiten des Fluids von einer Fluidversorgungsleitung ausgeführt. Weiterhin weist die Innenwandung ein (unteres) offenes Ende zum Einleiten des Fluids in den Wärmetauscherbereich der Wärmetauschersonde auf.

Sowohl das obere offene Ende als auch das untere offene Ende können sich hierbei über den gesamten Querschnitt der Innenwandung erstrecken. Auch kann vorgesehen sein, dass das obere Ende eine oder mehrere kleinere Öffnungen aufweist, so dass die gesamte Querschnittsfläche der Öffnung(en) geringer ist als die Querschnittsfläche der Innenwandung. Ebenso kann es sich auch bei den unteren Öffnungen bzw. der einen unteren Öffnung verhalten.

Gemäß einem weiteren Aspekt der Erfindung handelt es sich bei der Außenwandung um ein zur Innenwandung konzentrisch angeordnetes Rohr, welches einen größeren Durchmesser als die Innenwandung aufweist.

Gemäß einem weiteren Aspekt der Erfindung besteht die Außenwandung und/oder die Innenwandung aus Edelstahl. Auch ist es möglich, dass die Außenwandung aus einem Material besteht, welches hinsichtlich der verrottenden Biomasse chemisch resistent ist, wohingegen die Innenwandung beispielsweise aus Kunststoff bestehen kann.

Auch kann die Außenwandung der Wärmetauschersonde beispielsweise aus Kunststoff bestehen und(oder eine chemisch resistente Beschichtung aufweisen.

Gemäß einem weiteren Aspekt der Erfindung ist eine Anordnung mit einer oder mehreren oben und im Folgenden beschriebenen Wärmetauschersonden angegeben, welche darüber hinaus einen Träger aufweist, an dem die Wärmetauschersonde bzw. die Wärmetauschersonden befestigt ist/sind.

Dieser Träger kann, gemäß einem weiteren Aspekt der Erfindung, an seiner Oberseite zwei oder mehr Aufnahmelaschen aufweisen, welche zur Aufnahme einer Stapelgabel eines Gabelstaplers oder einer anderen hydraulischen Hebe-Senk-Vorrichtung (z.B. dem Frontlader eines üblichen landwirtschaftlichen Schleppers) ausgeführt sind, mit dessen Hilfe die Wärmetauschersonden durch Herunterdrücken des Trägers in die Biomasse gedrückt und durch Heraufziehen des Trägers aus der Biomasse herausgezogen werden können.

Gemäß einem weiteren Aspekt der Erfindung ist der Träger kastenartig ausgeführt, weist also eine Oberseite, eine Unterseite und vier Seitenflächen auf, welche einen Hohlraum einschließen. Die Wandung, also die Oberseite, die Unterseite und die Seitenflächen des Träges können ganz oder teilweise aus Stahl, Edelstahl oder einem anderen korrosionsbeständigen und gegen die Zersetzungsprodukte der verrottenden Biomasse resistenten Material bestehen.

Gemäß einem weiteren Aspekt der Erfindung weist die Anordnung eine Pumpe zum Pumpen des Fluids durch die Wärmetauschersonde(n) auf.

Weiterhin können eine oder mehrere Temperatursonden vorgesehen sein, mit deren Hilfe bestimmt werden kann, ob die Temperatur der Biomasse ausreichend hoch ist, um eine gewünschte Heizleistung der Anordnung zu erreichen.

Diese Sonden können sich beispielsweise außerhalb an der Außenwandung der Wärmetauschersonde befinden. Auch können Temperatursonden innerhalb der Wärmetauschersonde und insbesondere im oberen Bereich des Wärmetauscherbereichs angeordnet sein, um die Temperatur des aus der Sonde ausströmenden, erwärmten Fluides zu überwachen.

Die Temperatursonde und/oder die Pumpe können mit einer elektronischen Steuerung verbunden sein, welche die Heizleistung der Anordnung regelt, beispielsweise indem die Pumpgeschwindigkeit entsprechend eingestellt wird und dem Benutzer signalisiert wird, wann die Biomasse einer der Sonden auszutauschen ist.

Gemäß einem weiteren Aspekt der Erfindung weist die Anordnung einen Behälter zum Speichern der verrottenden Biomasse auf, auf welchen der Träger aufgesetzt werden kann, wenn die Sonden in die Biomasse eingebracht sind.

Beispielsweise weisen der Behälter und der Träger dieselbe Grundfläche auf, so dass der Träger mit dem Behälter bei in die Biomasse eingedrückten Wärmetauschersonden bündig abschließt.

Gemäß einem weiteren Aspekt der Erfindung handelt es sich bei dem Behälter um eine standardisierte Mülltonne, beispielsweise in Form eines Plastikcontainers mit oder ohne Deckel. Bei Anwendung im größeren Umfang kann es sich auch um einen handelsüblichen LKW-Container o.ä, handeln. Das System kann aber auch in ein stationär vorhandenes Reservoir (z.B. Dunghaufen) eingesetzt werden.

Weiterhin kann ein Solarmodul zum Versorgen der Pumpe und/oder der Temperatursonde mit Strom vorgesehen sein.

Gemäß einem weiteren Aspekt der Erfindung weist der Behälter eine wasserdurchlässige Innenwandung, beispielsweise in Form einer an der Außenwandung abgestützten Innenhaut auf, welche ein Abfließen von Flüssigkeit aus der verrottenden Biomasse ermöglicht. Diese Innenwandung ist beispielsweise in einem bestimmten Abstand zur Außenwandung des Behälters angeordnet, um das Abfließen der Flüssigkeit zu erleichtern.

Gemäß einem weiteren Aspekt der Erfindung ist die Verwendung einer oben und im Folgenden beschriebenen Anordnung zur Versorgung einer Niedertemperaturheizung angegeben. Bei der Temperaturheizung kann es sich um eine Fußbodenheizung eines Gebäudes, eine Brauchwasserheizung eines Brauchwasserkreislaufs eines Gebäudes, eine Heizung für ein Gewächshaus oder auch um eine Heizung für das Wasser eines Schwimmbades handeln.

Gemäß einem weiteren Aspekt der Erfindung ist ein Gewächshaus mit einer Heizung mit einer oben und im Folgenden beschriebenen Anordnung angegeben. Gemäß einem weiteren Aspekt der Erfindung sind ein Fußbodenheizungssystem, ein Brauchwasserheizungssystem, ein Gewächshausheizsystem und ein Schwimmbad angegeben, welche jeweils eine oder mehrere oben und im Folgenden beschriebenen Wärmetauschersonden und/oder eine oder mehrere oben und im Folgenden beschriebenen Anordnungen aufweisen.

Gemäß einem weiteren Aspekt der Erfindung ist ein Verfahren zum Gewinnen von Wärme aus verrottender Biomasse angegeben. Zunächst erfolgt ein Eindrücken einer Wärmetauschersonde in eine verrottende Biomasse. Danach erfolgt ein Einleiten von Fluid in einen Wärmetauscherbereich der Wärmetauschersonde. Dieses Fluid wird dann aus dem Wärmetauscherbereich zu einem Auslauf oder Auslass der Wärmetauschersonde rückgeleitet und während dieses Vorganges durch einen Wärmefluss von der Biomasse durch die Außenwandung der Sonde hindurch zum Fluid erwärmt. Der Wärmetauscherbereich ist hierbei zwischen einer Innenwandung und einer Außenwandung der Wärmetauschersonde angeordnet.

Im Folgenden werden mit Verweis auf die Figuren Ausführungsbeispiele der Erfindung beschrieben.

### Kurze Beschreibung der Figuren

Fig. 1 zeigt eine Wärmetauschersonde gemäß einem Ausführungsbeispiel der Erfindung.
Fig. 2 zeigt eine Wärmetauschersonde gemäß einem weiteren Ausführungsbeispiel der Erfindung.
Fig. 3 zeigt eine Anordnung mit vier Wärmetauschersonden gemäß einem Ausführungsbeispiel der Erfindung.
Fig. 4 zeigt eine Anordnung gemäß einem weiteren Ausführungsbeispiel der Erfindung.
Fig. 5 zeigt ein Heizsystem mit mehreren Anordnungen gemäß einem Ausführungsbeispiel der Erfindung.
Fig. 6 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

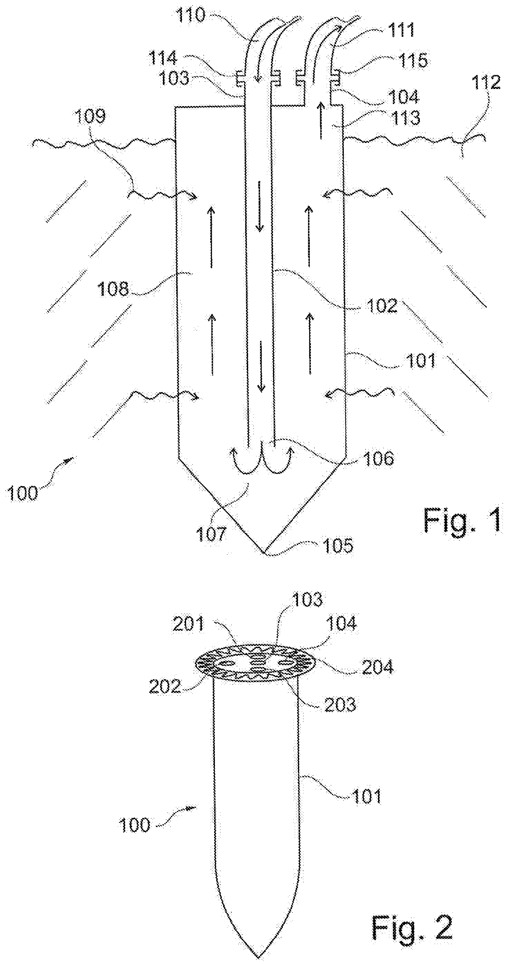

Fig. 1 zeigt eine Wärmetauschersonde 100 gemäß einem Ausführungsbeispiel der Erfindung. Die Wärmetauschersonde 100 weist eine Innenwandung 102 in Form eines zylindrischen Ohres auf. Der Querschnitt der Innenwandung 102 kann auch oval oder rechteckig sein oder eine andere Form aufweisen.

Das Fluid, welches in der Wärmetauschersonde erwärmt werden soll, wird von oben in die Öffnung 103 der Innenwandung 102 eingeleitet. Dies kann beispielsweise durch das Anschließen eines fluidführenden Versorgungsschlauches 110 erfolgen. Der Versorgungsschlauch 110 ist beispielsweise über eine Flanschverbindung 114 mit dem Einlass der Innenwandung 102 verbunden.

Das Fluid wandert dann durch den Innenbereich der Innenwandung 102 nach unten, wo es am unteren Ende 106 austritt. Das Fluid wird dann umgeleitet und fließt durch den Wärmetauscherbereich 108, der sich zwischen der Innenwandung 102 und der Außenwandung 101 der Wärmetauschersonde befindet, wieder zurück nach oben.

Da die Wärmetauschersonde bei ihrer Verwendung in eine verrottende Biomasse 112 eingedrückt ist, welche Verrottungswärme erzeugt, kann Wärme von der Biomasse 112 durch die Außenwandung 101 ins Innere des Wärmetauscherbereiches 108 fließen (siehe beispielsweise Pfeil 109).

Die Wärme wird dann ganz oder teilweise an das Fluid übertragen, welches sich hierdurch erwärmt. Am oberen Ende 113 der Wärmetauschersonde befindet sich ein Ausgang in Form von einer oder mehreren Öffnungen 104, welche mit einer weiterführenden Leitung 111 verbunden sind, die das erwärmte Fluid abführt. Die Leitung 111 ist beispielsweise über eine Flanschverbindung 115 mit der Öffnung 104 des Wärmetauscherbereiches der Wärmetauschersonde verbunden.

Der untere Bereich 107 der Wärmetauschersonde verengt sich nach unten hin und läuft spitz zu. Er weist am Ende eine Spitze 105 auf, welche ein Eindrücken der Sonde in die verrottende Biomasse erleichtert.

Bei der Innenwandung 102 kann es sich beispielsweise um ein innenliegendes dünnes Rohr handeln, welches kaltes Fluid (beispielsweise Wasser) nach unten führt. Bei der Außenwandung 101 handelt es sich beispielsweise um ein äußeres, zum Innenrohr konzentrisch angeordnetes Rohr und zwischen diesen beiden Rohren strömt das zu erwärmende Fluid langsam nach oben.

Die Länge der Sonde kann beispielsweise 160 cm betragen. Natürlich kann die Sonde auch länger oder kürzer ausgeführt sein.

Fig. 2 zeigt ein weiteres Ausführungsbeispiel der Wärmetauschersonde 100. Bei diesem Ausführungsbeispiel sind vier Öffnungen 104, 201, 202, 203 am oberen Ende des Wärmetauscherbereichs vorgesehen, um das erwärmte Fluid abzuleiten.

Weiterhin ist in diesem Ausführungsbeispiel vorgesehen, dass nicht jede Öffnung eine eigene Flanschverbindung aufweist. Vielmehr ist eine allgemeine Flanschverbindung 204 vorgesehen, welche sich um die gesamte Außenwandung 101 erstreckt. An dieser Flanschverbindung kann ein entsprechender Gegenflansch angebracht werden, welcher die Zuführleitung 110 und mehrere (oder auch nur eine, je nach Ausführungsbeispiel) Abführleitungen 111 trägt.

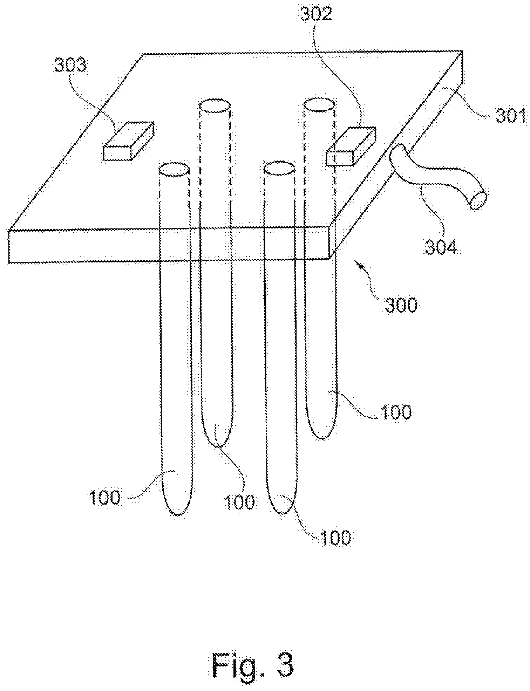

Der Gegenflansch (nicht gezeigt in Fig. 2) kann insbesondere Teil des Trägers 301 (siehe Fig. 3) sein, wodurch ein einfaches Austauschen und ein einfacher Anschluss der einzelnen Wärmetauschersonden 100 an den Träger ermöglicht wird.

Fig. 3 zeigt eine Anordnung 300, welche vier Wärmetauschersonden 100 sowie einen Träger 301 aufweist. Die vier Wärmetauschersonden 100 sind an dem Träger befestigt (beispielsweise über die in Fig. 2 gezeigte Flanschverbindung).

Eine Seitenfläche des Trägers weist eine Öffnung auf, durch welche die Zu- und Abflussleitungen 110, 111 (siehe Fig. 1) geführt sind, welche dann jeweils an die entsprechenden Zu- und Abflussöffnungen 103,104, 201, 202, 203 (siehe Fig. 1 und 2) der Wärmetauschersonden angeschlossen sind.

Darüber hinaus können zwei oder mehr Laschen 302, 303 vorgesehen sein, in welche handelsübliche Palettengabeln (Gabelstaplergabeln) eingreifen können, um die Anordnung zu heben und zu senken, um sie aus der Biomasse herauszuziehen bzw. in die Biomasse hineinzudrücken. Die Vorrichtung erlaubt aber auch das Heben und Herausziehen der Sonde(n) durch einen primitiven Flaschenzug und das Einbringen der Sonde(n) z.B. durch einen Vorschlaghammer. Somit ist das System auch unabhängig von großtechnischer Ausstattung oder landwirtschaftlicher Maschinen überall einsetzbar.

Somit können eine oder mehrere Wärmetauschersonden bei entsprechender "Reife" des Mists bzw. der Biomasse in diese tief eingebracht werden, indem die gesamte Anordnung nach unten gedrückt wird. Aufgrund der aggressiven Stoffe, die im Mist vorhanden sein können (z. B. Ammoniak), kann die Außenwandung der Wärmetauschersonde aus Edelstahl gefertigt sein oder eine entsprechende resistente Beschichtung aufweisen.

Durch das innenliegende, zentrale, dünne Rohr 102 können die Sonden mit einem kalten Fluid, beispielsweise Kaltwasser, beströmt werden, welches durch das Rohr 102 nach unten bis an die Spitze der entsprechenden Sonde fließt. Dort tritt das Fluid am offenen Ende des zentralen Rohrs 102 aus, kehrt seine Strömunsrichtung im Wesentlichen um und strömt entsprechend langsam durch das wesentlich dickere äußere Rohr 101 nach oben zurück, wo es abgepumpt wird.

Die dabei von dem Fluid aufgenommene thermische Energie kann dann für eine Niedertemperatur-Heizung verwendet werden. Hierbei handelt es sich beispielsweise um eine Fußbodenheizung, eine Brauchwasserheizung, die Heizung von Gewächshäusern oder Schwimmbädern.

Um immer ausreichend "reifen Mist" oder ein anderes verrottendes Material in einem brauchbaren Erhitzungszustand zur Verfügung zu haben, kann das wärmeliefernde Material in einen oben offenen Container gefüllt und durch eine oder mehrere Temperatursonden überwacht werden. Bei dem Container kann es sich beispielsweise um einen handelsüblichen Schrottcontainer oder Müllcontainer handeln.

Je Container kann eine Temperatursonde vorgesehen sein, die in den Container integriert ist. Diese Sonde kann batteriegetrieben sein und/oder mit Solarstrom aus einer Solarzellenanordnung betrieben werden. Diese Solarzellen zur Sensorversorgung können direkt an dem Container angebracht sein.

Der Temperatursensor kann zur kabellosen Datenübertragung an eine zentrale Steuerung ausgeführt sein, welche die empfangenen Daten sammelt, auswertet und die Pumpen entsprechend steuert und das Signal zum Austausch der Biomasse oder zum Einbringen der Sonden in die Biomasse absetzt.

Bei Erreichen der gewünschten Temperatur wird dann eine entsprechende Anzahl von Sonden in den Containerinhalt gedrückt, um den Wärmetausch vorzunehmen.

Um eine kontinuierliche Heizleistung über Monate oder gar Jahre zu erreichen, können verschiedene Container in entsprechenden zeitlichen Abständen mit frischer Biomasse gefüllt werden, damit ein rechtzeitiger Containertausch erfolgen kann.

Der "abgearbeitete" Container enthält nach der "heißen Phase" der Verrottung nur noch Material, das ohne Umweltbelastung überall entweder entsorgt oder als Substrat für Gartenbau und Landwirtschaft verwendet werden kann.

Beispielsweise weist die Anordnung vier Sonden mit jeweils einer mehr oder weniger deutlich ausgeprägten Spitze auf, welche an der Unterseite des Stahlkastens (Träger), der entsprechend kräftig ausgeführt ist, befestigt werden.

Im Inneren des Stahlkastens verlaufen die Zu- und Ableitungen, also Warm- und Kaltwasserleitungen, die den Kasten an einer geeigneten Stelle, die sich beispielsweise in einer Seitenwandung 301 befindet, gebündelt verlassen. Darüber hinaus können auch Datenleitungen und Stromleitungen zum Datentransport zwischen Sensorik und zentraler Steuerung bzw. Energieversorgung vorgesehen sein.

Auf der Oberseite des Trägers befinden sich zwei oder vier breite Stahllaschen, die zur Aufnahme einer handelsüblichen Palettengabel geeignet sind. Da jeder Landwirt über einen Frontlader am Schlepper und eine entsprechende Palettengabel verfügt, kann er den Träger mit den Wärmetauschersonden mit Hilfe des Frontladers sowohl in den reifen Mist eindrücken und später auch wieder herausziehen.

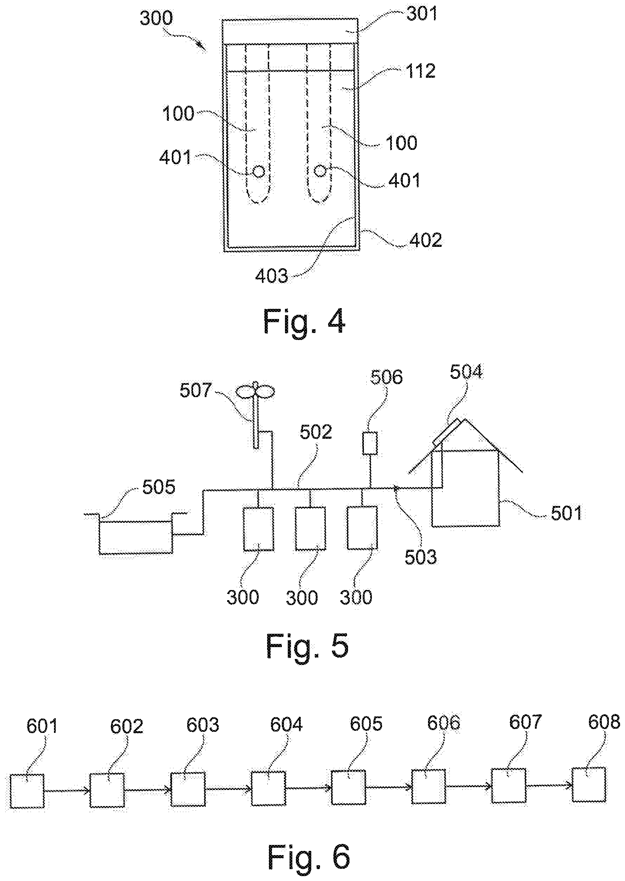

Die Strömungsgeschwindigkeit des Fluids kann anhand des gewünschten und erreichbaren Temperaturzieles des Fluids durch eine entsprechend thermostatisch gesteuerte Pumpe 503 (siehe Fig. 5) erfolgen.

Die Pumpe 503 und die zentrale Steuerungseinheit 506 können z. B. über ein Photovoltaikmodul 504 mit Strom versorgt werden, so dass die gesamte Anlage umweltfreundlich und unabhängig von anderweitiger Infrastruktur auch an entlegenen Orten betrieben werden kann.

Aus einem unerwünschten biologischen Abfallprodukt wird somit Wärmeenergie zum Heizen.

Fig. 4 zeigt eine Anordnung 300, bestehend aus einem Träger 301 mit mehreren Wärmetauschersonden 100 und einem Behälter 402 zum Speichern einer Biomasse 112, die sich im Inneren des Behälters befindet.

Die Wärmetauschersonden 100 sind in die Biomasse 112 hineingedrückt und befinden sich somit ebenfalls im Inneren des Behälters 402, so dass der Träger 301 bündig mit dem Behälter 402 abschließt. Auf diese Weise kann beispielsweise verhindert werden, dass ungewollt Regenwasser in den Behälter eindringt.

Um eine für den Verrottungsvorgang optimale Atmosphäre im Inneren des Behälters 401 zu schaffen, kann beispielsweise eine Innenwandung 403 vorgesehen sein, welche zumindest teilweise wasserdurchlässig ist, um ein Abfließen von flüssigen Verrottungsprodukten zu ermöglichen. Hierbei kann ein Abstand zwischen der Innenwandung 403 und der Außenwandung 402 des Behälters vorgesehen sein, um dieses Abfließen zu erleichtern. Insbesondere können Löcher im unteren Bereich des Behälters 402 vorgesehen sein, damit die Flüssigkeit nach außen abfließen kann.

Weiterhin können Temperatursensoren 401 oder auch Feuchtigkeitssensoren vorgesehen sein, welche beispielsweise außen an den Wärmetauschersonden 100 angebracht sind. Diese Sensoren können die Atmosphäre im Inneren der Biomasse überwachen und beispielsweise feststellen, ob die Temperatur der verrottenden Biomasse noch ausreichend hoch ist.

Auch kann die Feuchtigkeit der Biomasse untersucht werden und es kann vorgesehen sein, dass Flüssigkeit von oben zugeführt wird, falls die Feuchte zu gering ist. Hierfür kann ein Bewässerungssystem in Form von einer oder mehreren Leitungen vorgesehen sein, welches ebenfalls über den zentralen Einlass 304 (siehe Fig. 3) in den Träger 301 eingeführt wird und welches über entsprechende Auslässe in der Unterseite des Trägers 301 Flüssigkeit an die Biomasse abgeben kann.

Diese Bewässerung kann mit Hilfe der Sensoren 401 und der in Fig. 5 gezeigten Steuerung 506 automatisch erfolgen.

Bei dem Container 402 kann es sich beispielsweise um einen Müllcontainer mit einer rechteckigen Klappe handeln. Die Innenwandung 403 kann beispielsweise in Form eines Lochbleches ausgeführt sein, damit die Flüssigkeit ablaufen kann und um eine Luftzirkulation zwischen der Innenwandung 403 und der Außenwandung 402 zu ermöglichen.

Fig. 5 zeigt ein Heizsystem mit einem zu beheizenden Schwimmbad 505 und einem zu beheizenden Haus 501. Auf dem Dach des Hauses ist ein Photovoltaikmodul 504 angeordnet, um für die Anlage Strom zu erzeugen. Auch ist eine Windturbine 507 vorgesehen, welche ebenfalls Strom erzeugen kann.

Es ist ein Leitungssystem 502 vorgesehen, welches sowohl die fluidführenden Leitungen als auch die stromführenden Leitungen, an welche das Photovoltaikmodul 504, die Windturbine 507 und die Steuereinheit 506 angeschlossen sind, sowie die datenführenden Leitungen zum Datenaustausch zwischen den einzelnen Komponenten 300, 503, 504, 506, 507, 505, 501 aufweist.

An die fluidgeführten Leitungen sind die Wärmetauschersonden der Anordnungen 300 angeschlossen. Darüber hinaus ist eine Pumpe 503 vorgesehen, welche, gesteuert von der Steuereinheit 506 und versorgt über das Photovoltaikmodul 504 und die Windturbine 507, den Fluidkreislauf betreibt.

Fig. 6 zeigt ein Flussdiagramm eines Verfahrens gemäß einem Ausführungsbeispiel der Erfindung. In Schritt 601 werden mehrere Wärmetauschersonden an einen entsprechenden Träger angeschlossen. Bei diesem Schritt erfolgt auch der Anschluss der Fluidleitungen der Wärmetauschersonden an den Fluidkreislauf. In Schritt 602 wird dann Fluid in die Wärmetauscherbereiche der Wärmetauschersonden eingeleitet. Dieses Fluid wird dann in Schritt 603 auf seinem Weg zum Ausgang der Sonden durch die Verrottungswärme der Biomasse erwärmt und in Schritt 604 einer Niedertemperaturheizung zugeführt. In Schritt 605 gibt das Fluid einen Teil seiner Wärme an die Heizung ab und wird in Schritt 606 wieder zurück zu den Wärmetauschersonden geführt.

In Schritt 607 wird festgestellt, dass die Verrottungswärme einer der Anordnungen nicht mehr ausreicht, so dass in Schritt 608 die Sonden aus der Biomasse gezogen werden und in eine neu bereitgestellte Biomasse eingedrückt werden.

Der Heizkreislauf muss hierdurch nicht unterbrochen werden, da mehrere Anordnungen 300 vorgesehen sind, welche parallel arbeiten und an denselben Heizkreislauf angeschlossen sind.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Anordnung mit mehreren Wärmetauschersonden (100) zur Gewinnung von Wärme aus verrottender Biomasse, die Wärmetauschersonden (100) jeweils aufweisend:
- eine Innenwandung (102) zum Einleiten von Fluid in einen Wärmetauscherbereich (108) der Wärmetauschersonde;
- eine Außenwandung (101) zum Rückleiten des Fluids aus dem Wärmetauscherbereich;
wobei der Wärmetauscherbereich zwischen der Innenwandung und der Außenwandung angeordnet ist;
wobei die Anordnung einen Träger (301) aufweist, an dem die Wärmetauschersonden befestigt sind; **dadurch gekennzeichnet, dass** der Träger (301) an seiner Oberseite zwei Aufnahmelaschen (302, 303) zur Aufnahme einer Hebe-Senk-Vorrichtung aufweist, mit dessen Hilfe die Wärmetauschersonden in die Biomassen gedrückt und aus der Biomasse herausgezogen werden können.

2. Anordnung nach Anspruch 1,
wobei die Außenwandung (101) der Wärmetauschersonde (100) am Ende (105) spitz zuläuft, so dass ein Eindrücken der Wärmetauschersonde in die Biomasse ermöglicht wird.

3. Anordnung nach einem der vorhergehenden Ansprüche,
wobei die Innenwandung (102) der Wärmetauschersonde (100) als Rohrleitung mit einem oberen offenen Ende (103) zur Aufnahme des Fluids von einer Fluidversorgungsleitung und einem unteren offenen Ende (106) zum Einleiten des Fluids in den Wärmetauscherbereich ausgeführt ist; und
wobei die Außenwandung (101) der Wärmetauschersonde (100) ein zur Innenwandung konzentrisch angeordnetes Rohr mit einem größeren Durchmesser als die Innenwandung ist.

4. Anordnung nach einem der vorhergehenden Ansprüche,
wobei die Außenwandung (101) der Wärmetauschersonden (100) aus Edelstahl besteht.

5. Anordnung nach einem der vorhergehenden Ansprüche,
wobei der Träger (301) kastenartig ausgeführt ist und wobei dessen Wandung aus Stahl besteht.

6. Anordnung nach einem der vorhergehenden Ansprüche, weiterhin aufweisend:
eine Pumpe (503) zum Pumpen des Fluids durch die Wärmetauschersonden (100).

7. Anordnung nach einem der vorhergehenden Ansprüche, weiterhin aufweisend:
eine Temperatursonde (401) zum Bestimmen, ob die Temperatur der Biomasse ausreichend ist, um eine gewünschte Heizleistung der Anordnung zu erreichen.

8. Anordnung nach einem der vorhergehenden Ansprüche, weiterhin aufweisend:
einen Behälter (402) zum Speichern der verrottenden Biomasse und zur Aufnahme des Trägers (301).

9. Anordnung nach Anspruch 8,
wobei es sich bei dem Behälter (402) um eine Mülltonne handelt.

10. Anordnung nach Anspruch 8 oder 9,
wobei der Behälter (402) eine wasserdurchlässige Innenhaut (403) aufweist, um ein Abfließen von Flüssigkeit aus der verrottenden Biomasse zu ermöglichen.

11. Verwendung einer Anordnung nach einem der vorhergehenden Ansprüche zur Versorgung einer Niedertemperaturheizung.

12. Gewächshaus (501) mit einer Heizung mit einer Anordnung nach einem der Ansprüche 1 bis 10.

13. Verfahren zum Gewinnen von Wärme aus verrottender Biomasse, das Verfahren aufweisend die folgenden Schritte:
- Aufnehmen einer Hebe-Senk-Vorrichtung in die Aufnahmelaschen (301, 302) einer Anordnung mit mehreren Wärmetauschersonden zur Gewinnung von Wärme aus verrottender Biomasse gemäss einem der Ansprüche 1-12;
- Eindrücken der Wärmetauschersonden (100) in die verrottende Biomasse mithilfe der Hebe-Senk-Vorrichtung;
- Einleiten von Fluid in einen Wärmetauscherbereich (108) der Wärmetauschersonde;
- Rückleiten des Fluids aus dem Wärmetauscherbereich;
- Erwärmen des Fluids durch einen Wärmefluss von der Biomasse durch die Außenwandung zum Fluid während der Rückleitung des Fluids;
wobei der Wärmetauscherbereich zwischen einer Innenwandung (102) und einer Außenwandung (101) der Wärmetauschersonde angeordnet ist.

## Claims

1. Arrangement with several heat exchanger probes (100) for the extraction of heat out of rotting biomass, wherein the heat exchanger probes (100) each comprise:
- an inner wall (102) for the feeding of fluid into an heat exchanger area (108) of the heat exchanger probe;
- an outer wall (101) for directing back the fluid out of the heat exchanger area;
wherein the heat exchanger area is located between the inner wall and the outer wall;
wherein the arrangement comprises a carrier (301), on which the heat exchanger probes are mounted;
**characterised in that** the carrier (301) comprises two reception flaps (302, 303) for the reception of a device for lifting and lowering, wherein by means of the device for lifting and lowering the heat exchanger probes can be pushed into the biomass and can be pulled out of the biomass.

2. Arrangement according to claim 1,
wherein the outer wall (101) of the heat exchanger probe (100) tapers on the end, such that a pushing of the heat exchanger probe into the biomass is enabled.

3. Arrangement according to one of the preceding claims,
wherein the inner wall (102) of the heat exchanger probe (100) is designed as a pipeline with an upper open ending (103) for the reception of the fluid from a fluid supply conduit and a lower open ending (106) for feeding the fluid into the heat exchanger area; and
wherein the outer wall (101) of the heat exchanger probe (100) is a pipe, which is arranged concentric to the inner wall and which comprises a larger diameter than the inner wall.

4. Arrangement according to one of the preceding claims,
wherein the outer wall (101) of the heat exchanger probes (100) consists of stainless steel.

5. Arrangement according to one of the preceding claims,
wherein the carrier (301) is designed in a box like manner and wherein the wall of the carrier consists of steel.

6. Arrangement according to one of the preceding claims, the arrangement further comprising:
a pump (503) for pumping the fluid across the heat exchanger probes (100).

7. Arrangement according to one of the preceding claims, the arrangement further comprising:
a temperature probe (401) for determining whether a temperature of the biomass is sufficient to achieve a desired heating power of the arrangement.

8. Arrangement according to one of the preceding claims, the arrangement further comprising:
a container (402) for storing the rotting biomass and for the reception of the carrier (301).

9. Arrangement according to claim 8,
wherein the container (402) is a dustbin.

10. Arrangement according to claim 8 or 9,
wherein the container (402) comprises a water permeable inner skin (403) for enabling a drain-of of liquid of the rotting biomass.

11. Use of an arrangement according to one of the preceding claims for supplying a low-temperature heating.

12. Greenhouse (501) with a heating with an arrangement according to one of the claims 1 to 10.

13. Method for the extraction of heat out of rotting biomass, the method comprising the following steps:
- reception of a device for lifting and lowering in the reception flaps (302, 303) of an arrangement with several heat exchanger probes for the extraction of heat out of rotting biomass according to one of the claims 1 to 10;
- pushing the heat exchanger probes (100) into the rotting biomass by means of the device for lifting and lowering;
- feeding of fluid in a heat exchanger area (108) of the heat exchanger probe;
- directing back the fluid out of the heat exchanger area;
- heating the fluid by means of a heating flow from the biomass through the outer wall to the fluid while directing back the fluid;
wherein the heat exchanger area is arranged between an inner wall (102) and an outer wall (101) of the heat exchanger probe.

## Revendications

1. Disposition comprenant plusieurs sondes pour échangeur de chaleur (100) en vue de l'obtention de chaleur à partir de biomasse pourrissante, les sondes pour échangeur de chaleur (100) présentant respectivement :
- une paroi interne (102) destinée à l'introduction de fluide dans une zone (108) des échangeurs de chaleur de la sonde pour échangeur de chaleur ;
- une paroi externe (101) destinée à la recirculation du fluide en dehors de la zone des échangeurs de chaleur ;
dans laquelle la zone des échangeurs de chaleur est disposée entre la paroi interne et la paroi externe ;
dans laquelle la disposition présente un support (301) auquel sont fixées les sondes pour échangeur de chaleur ;
**caractérisée en ce que**
le support (301) présente deux languettes de protection (302, 303) au niveau de sa face supérieure en vue de recevoir un dispositif de levage et d'abaissement, par l'intermédiaire duquel les sondes pour échangeur de chaleur peuvent être immergées dans les biomasses et extraites hors de la biomasse.

2. Disposition selon la revendication 1,
dans laquelle la paroi externe (101) de la sonde pour échangeur de chaleur (100) se termine en pointe au niveau de l'extrémité (105), de manière à permettre une immersion de la sonde pour échangeur de chaleur dans la biomasse.

3. Disposition selon l'une des revendications précédentes,
dans laquelle la paroi interne (102) de la sonde pour échangeur de chaleur (100) est conçue en tant que canalisation tubulaire avec une extrémité (103) supérieure ouverte destinée à la réception du fluide par une canalisation d'alimentation en fluide et une extrémité (106) inférieure ouverte en vue de l'introduction du fluide dans la zone des échangeurs de chaleur ; et
dans laquelle la paroi externe (101) de la sonde pour échangeur de chaleur (100) est un tube disposé de manière concentrique, par rapport à la paroi interne, avec un diamètre supérieur à la paroi interne.

4. Disposition selon l'une des revendications précédentes,
dans laquelle la paroi externe (101) des sondes pour échangeur de chaleur (100) est en acier inoxydable.

5. Disposition selon l'une des revendications précédentes,
dans laquelle le support (301) est conçu en forme de caisson et dans laquelle sa paroi est en acier.

6. Disposition selon l'une des revendications précédentes, présentant en outre :
une pompe (503) en vue du pompage du fluide à travers les sondes pour échangeur de chaleur (100).

7. Disposition selon l'une des revendications précédentes, présentant en outre :
une sonde de température (401) en vue de déterminer si la température de la biomasse est suffisante pour atteindre une puissance de chauffage souhaitée de la disposition.

8. Disposition selon l'une des revendications précédentes, présentant en outre :
un collecteur (402) destiné au stockage de la biomasse pourrissante ainsi qu'à la réception du support (301).

9. Disposition selon la revendication 8,
dans laquelle le collecteur (402) en question est un conteneur à ordures.

10. Disposition selon la revendication 8 ou 9,
dans laquelle le collecteur (402) présente une membrane intérieure (403) perméable à l'eau afin de permettre un écoulement du liquide hors de la biomasse pourrissante.

11. Utilisation d'une disposition selon l'une des revendications précédentes en vue de la fourniture d'un chauffage à basse température.

12. Serre (501) comprenant un chauffage avec une disposition selon l'une des revendications 1 à 10.

13. Procédé destiné à l'obtention de chaleur à partir de biomasse pourrissante, ledit procédé présentant les phases suivantes :
- logement d'un dispositif de levage et d'abaissement dans les languettes de protection (301, 302) d'une disposition avec plusieurs sondes pour échangeur de chaleur en vue de l'obtention de chaleur à partir de biomasse pourrissante selon l'une des revendications 1 à 12 ;
- immersion des sondes pour échangeur de chaleur (100) dans la biomasse pourrissante au moyen du dispositif de levage et d'abaissement ;
- introduction de fluide dans une zone (108) des échangeurs de chaleur de la sonde pour échangeur de chaleur ;
- recirculation du fluide à partir de la zone des échangeurs de chaleur ;
- réchauffement du fluide par l'intermédiaire d'un flux de chaleur de la biomasse jusqu'au fluide, à travers la paroi externe, pendant la recirculation du fluide ;
dans lequel la zone des échangeurs de chaleur est disposée entre une paroi interne (102) et une paroi externe (101) de la sonde pour échangeur de chaleur.
